# EUROPEAN PATENT SPECIFICATION

(11) **EP 2 163 157 B1**
(45) Date of publication and mention of the grant of the patent: **15.06.2011**
(21) Application number: 09167561.1
(22) Date of filing: 10.08.2009
(51) Int. Cl.: A21D 2/18, A23L 1/0522

(54) **Production of extruded cheese crackers and snacks**
Herstellung von extrudierten Käsecrackern und Snacks
Fabrication de craquelins et d'en-cas à base de fromage extrudé

(30) Priority: 28.08.2008 US 230359
(43) Date of publication of application: 17.03.2010
(73) Proprietor: Kraft Foods Global Brands LLC, Northfield, IL 60093 (US)
(72) Inventor: Karwowski, Jan, Midland Park, NJ 07432 (US); Vemulapalli, Vani, Whippany, NJ 07981 (US)
(74) Representative: Murray, Adrian D'Coligny

(56) References cited:
- EP-A1- 1 637 039
- WO-A2-2006/138524
- US-A- 5 340 598
- US-A1- 2006 228 456
- US-A1- 2009 017 170
- US-B1- 6 479 090
- FRAN BELSHAW: "Special starch simplifies nutritional snack preparation" FOOD PROCESSING, vol. 33, no. 11, 1972, pages 40-41, XP009125108

## Description

### FIELD OF THE INVENTION

The present invention generally relates to the continuous production of extruded dough-based cheese crackers and snacks, and more particularly, to methods for mass producing cheese crackers and snacks having a pasta shape or form.

### BACKGROUND OF THE INVENTION

Cheese snacks or crackers are generally produced by mixing, ingredients to form a dough, laminating the dough, and sheeting the dough, cutting the dough sheet into pieces, with or without dockers, and baking the pieces. The products may be produced from a dough sheet in many different shapes and sizes. However, pasta shapes, such as hollow tubes, like macaroni, wagon wheel shapes with spokes, grid shapes, and helix or spiral shapes can not be produced by cutting a dough sheet. Some cheese snacks are produced by extruding and twisting solid ropes, however these products are generally puffed, and highly expanded, and do not provide a leavened, cracker texture and laminar cell structure. Fried pasta snacks may be produced by frying semolina/flour based pasta extrudate and then topically oiling and seasoning. Also, extruded pellets in various pasta shapes may be expanded by hot air or frying and then topically oiled and seasoned. However, these fried pasta snacks are not produced with real cheese to provide a cracker texture and cell structure, and intense cheese flavor.

As disclosed in U.S. Patent No. 5,695,804 to Hnat et al, durum flour and semolina are used in the production of pasta products such as macaroni and spaghetti. Durum wheat is a hard winter wheat which has a gluten content which enables the production of cohesive, extrudable doughs which can be shaped, stretched, and cut into pieces, which can retain a hollow or ribbed shaped. When dried, the extruded, durum wheat based dough provides a hard, brittle shaped product which upon subsequent boiling yields a soft, pliable pasta product. However, in the production of a cheese cracker or snack, a machinable dough which may be produced at room temperature and which retains its extruded shape during transport and during subsequent baking into a crisp or crunchy texture is desired.

Starch-based compositions which have little or no gluten, such as potato flour or corn flour, when mixed with water, do not form a dough at room temperature that is coherent and continuously machinable or sheetable. Machinability of doughs made from ingredients having little or no gluten may be improved by forming a dough under elevated temperature conditions, such as by steaming the ingredients as disclosed in U.S. Patent Nos. 4,873,093 and 4,834,996 to Fazzolare et al.

U.S. Pat. Nos. 4,931,303 and 4,994,295 to Holm et al disclose that in the production of fabricated snack products having controlled surface bubbling, the dough sheet must have cohesive properties which permit the surface or surfaces of the dough or preform to stretch relatively uniformly when forming bubbles during frying. The highly cohesive, non-adhesive dough, it is disclosed, can be made by adjusting the quantity of free gelatinized starch, the degree of retrogradation of the starch (thereby affecting the water absorption of a given quantity of the starch), and the concentration of any starch-complexing emulsifiers present. In the Holm et al process, a dough may be formed comprising, e.g. potato solids or corn solids, raw or pre-gelatinized starches, modified starches, flavorings, oils, and the like. However, production of a cheese cracker or snack in a pasta shape is not disclosed.

U.S. Pat. No. 4,560,569 to Ivers discloses that in the production of a dough-based fried food product, a processed starch in either gelatinized or ungelatinized form is frequently added when a low starch flour or flake is employed. Water, it is disclosed, is required to soften the flour, and depending upon the protein content of the flour, to form a network of protein (gluten) which is the framework of the product. According to Ivers, starch, which is present in flours, is used as a binder and is required for the unleavened product to expand upon frying. Dough stickiness and hardness of the cooked product may be controlled by the addition of oil to the dough to control the extent of the protein framework. The dough is prepared by adjusting the ratios of components and the mixing time to allow it to sheet uniformly at the desired thickness without sticking or tearing. According to Ivers, addition of a small amount of a lecithin-in-water suspension to the formulation of the dough-based fried snack foods improves the transfer, sheeting and cutting, and significantly reduces clumping during frying without the rapid buildup of free fatty acids and without significant darkening of frying oil normally associated with the frying of foods containing lecithin. Production of a cheese cracker or snack in a pasta shape is not disclosed.

U.S. Pat. No. 4,976,982 to Gillmore et al discloses a method for preparing low calorie pasta products comprising glutinous flour, an added fiber source, a reducing agent and water. The use of a reducing agent neutralizes oxidizers present in or on the surface of the added fiber source, whereby improved texture and mouth feel of high fiber-containing pasta is achieved.

According to Fran Belshaw, "Special starch simplifies nutritional snack preparation", extruded cheese snacks may be prepared by admixing a waxy corn "cold swelling" starch, spray dried Cheddar cheese, salt and water, extruding the dough and cutting the dough rope into shaped pieces and baking or frying the pieces. Us 6479090B1 discloses a method for preparing cheese snacks with a relatively low content of about 8% cheese by weight based upon the weight of the dough, by sheeting/laminating the dough, cutting and baking the pieces.

According to Matz, Cookie and Cracker Technology, 2nd ed., AVI Publishing, pp 11-12 (1968), the characteristics of a flour, due to a given quality and quantity of gluten, can be changed by the action of various nonproteinaceous modifying substances, particularly reducing agents and oxidizing agents. The usual effect of reducing agents such as sulfite, cysteine, and reduced glutathione, it is disclosed, is to make the doughs softer, stickier, and less elastic.

In the present invention, a real cheese or dairy cheese ingredient, is employed to produce cheese crackers or snacks having a non-glassy, crisp or crunchy cracker texture and a substantially uniform, unpuffed, leavened cracker cell structure in a pasta shape, such as a hollow shape, a grid shape, or helix or spiral shape, from coherent, machinable, extrudable, shape-retaining doughs without the need for high gluten content flours such as durum wheat or semolina.

### SUMMARY OF THE INVENTION

In a first aspect of the invention, extruded cheese crackers or snacks having a pasta shape may be produced by admixing ingredients including at least one flour, preferably wheat flour, cheese, and water to obtain a dough having a cheese content of from about 5% by weight to about 60% by weight, preferably from about 10% by weight to about 50% by weight, most preferably from about 15% by weight to about 25% by weight, based upon the weight of the dough, and extruding the dough through a die to obtain a shaped dough rope. For indulgent products with a strong cheesy taste, higher amounts of cheese are preferred, for example from about 30% by weight to about 45% by weight, based upon the weight of the dough. The extrusion may be conducted at a pressure and temperature which avoid substantial gelatinization of starch and expansion of the dough. The shaped dough rope may be cut into shaped pieces, which may be baked or fried to obtain shaped cheese crackers or snacks with a non-glassy, crispy or crunchy texture, and a non-puffed, substantially uniform cell structure.

In embodiments of the invention, the extrusion may be conducted at a pressure of less than about 827 kPa (120 psig), preferably less than about 690 kPa (100 psig), most preferably from about 138 kPa (20 psig) to about 414 kPa (60 psig), and a temperature below the gelatinization temperature of starch, preferably at a temperature of less than about 52°C (125°F), most preferably less than about 38°C (100°F).

In preferred embodiments the dough may include a pregelatinized waxy starch to help retain the extruded dough shape of the dough pieces during transport of the dough pieces and during baking. The pregelatinized waxy starch may be employed in an amount of up to about 10% by weight, for example, from about 0.5% by weight, to about 5% by weight, preferably from about 1% by weight to about 3% by weight, based upon the weight of the dough.

In a second aspect of the invention, a cheese cracker or snack obtained by baking a substantially homogeneous dough having flour, a pregelatinized waxy starch, and a real cheese content of from about 5% by weight, to about 60% by weight, preferably from about 10% by weight to about 50% by weight, most preferably from about 15 % by weight to about 25% by weight, based upon the weight of the dough has a pasta shape such as a hollow shape, a helix or spiral shape, or a grid shape, while exhibiting a non-glassy crispy, texture, and a leavened, non-puffed cell structure. For indulgent products with a strong cheesy taste, exemplary cheese amounts may be from about 30% by weight to about 45% by weight, based upon the weight of the dough.

### BRIEF DESCRIPTION OF THE DRAWINGS

The present invention is described in the detailed description which follows, in reference to the noted plurality of drawings by way of non-limiting examples of exemplary embodiments of the present invention.

FIG. 1 schematically shows an extruded dough cheese cracker or snack process flow for making pasta shaped cheese crackers and snacks in accordance with the method of the present invention.

FIG. 2 shows a triangular grid shaped extruded cheese cracker or snack which may be produced using the method of the present invention.

FIG. 3 shows a wagon wheel shaped extruded cheese cracker or snack which may be produced using the method of the present invention.

FIG. 4 shows a pretzel shaped extruded cheese cracker or snack which may be produced using the method of the present invention.

FIG. 5 shows a loose or noodle, helical or spiral shaped extruded cheese cracker or snack which may be produced using the method of the present invention.

FIG. 6 shows a tubular shaped extruded cheese cracker or snack which may be produced using the method of the present invention.

FIG. 7 shows a side view of the tubular shaped extruded cheese cracker or snack of FIG. 6 which may be produced using the method of the present invention.

FIG. 8 shows a ring shaped extruded cheese cracker or snack which may be produced using the method of the present invention.

### DETAILED DESCRIPTION

The present invention provides a process for the continuous production of extruded cheese crackers and snacks, and more particularly, to methods for mass producing cheese crackers and snacks having a pasta shape or form. In embodiments of the invention, tubular shaped dough pieces and crackers and snacks made from them are hollow and maintain open ends without collapsing. Grid shaped dough pieces and crackers and snacks made from them maintain ribs or grids without tearing or collapsing, and helical or spiral shaped dough pieces and crackers and snacks retain sharp, well-defined curves and flights or threads without collapsing. The doughs may be formed using continuous mixing processes, at low extrusion pressures and temperatures into pasta shaped dough pieces which may be baked or fried to obtain crackers or snacks with significant levels of 100% real cheese. The crackers or snacks exhibit a non-glassy crispy or crunchy, texture, and a leavened, substantially uniform, non-puffed cell structure.

In embodiments of the invention, extruded cheese crackers or snacks may be produced by admixing ingredients which include at least one flour, cheese, and water to obtain a dough. The dough may be extruded through a die to obtain a shaped dough rope, the extrusion being at a pressure and temperature which avoid substantial gelatinization of starch and expansion of the dough. The shaped dough rope may be cut into shaped pieces, and the shaped pieces may be baked or fried to obtain shaped cheese crackers or snacks with a crispy or crunchy texture. The dough within the die and upon extrusion from the die takes the shape of the die. If the shaped dough exiting the die orifice were not cut at the die, it would form a long shaped dough rope. For purposes of the present invention, the shaped dough exiting the die orifice or protruding from the die orifice is considered to be a shaped dough rope before it is cut, irrespective of how long the shaped dough is, or how much it protrudes from the die, before it is cut at the die face or die orifice.

The dough may be prepared using conventional dough mixing equipment, such as an upright mixer or batch mixer and then the prepared dough may be transferred to an extruder or continuous mixer for extrusion into shaped dough ropes. In embodiments of the invention, the dough may be prepared and then transferred with little or no lay time for extrusion into the shaped dough ropes. In embodiments of the invention, the dough may be produced continuously by adding the ingredients to the extruder or continuous mixer for admixing the ingredients to produce a dough which may then be extruded into a shaped dough rope. Generally, mixing of the ingredients to obtain a substantially homogeneous dough for extrusion may be performed in a dough mixer at about 20 rpm to about 40 rpm for about 7 minutes to about 10 minutes.

High extrusion pressures tend to change the air cells in a dough. Generally, the greater the pressure the lesser the degree of expansion upon subsequent baking or frying and the harder the texture of the cracker or snack. Also, overworking of the gluten or protein in the dough tends to result in a glassy texture, rather than a crisp, cracker texture. In embodiments of the invention, the extrusion may be conducted at a pressure of less than about 827 kPa (120 psig), preferably less than about 690 kPa (100 psig), most preferably from about 138 kPa (20 psig) to about 414 kPa (60 psig).

Low pressure extruders or continuous mixers may be used to extrude the doughs into shaped dough ropes, using conventional pasta dies. In preferred embodiments, a low pressure extruder or forming or shaping extruder, such as one which is generally employed for the extrusion of pretzel doughs may be used in the present invention. The extrusion apparatus employed may include a pump, which pumps the dough into a chamber, and when the pressure in the chamber reaches a desired pressure, such as about 207 kPa (30 psig) to about 345 kPa (50 psig), the dough is forced out of or exits the extrusion die to form a shaped rope. The dough may be pumped using a displacement pump, or plastic screws may be employed to pump the dough into a die head, which is horizontally aligned with the longitudinal axis of the screws. In embodiments of the invention, a pre-feed may be operated at about 3 Hz to about 10 Hz and an extruder auger may be operated at about 8 Hz to about 30 Hz.

High extrusion temperatures which result in substantial gelatinization of the starch of the at least one flour ingredient tends to result in a hard, glassy texture rather than a crisp or crunchy cracker or snack texture. Also, high temperatures, for example above the boiling point of water tend to cause puffing or excessive expansion of the dough upon exiting the extrusion die. Generally, the extrusion may be conducted at about room temperature, or at a temperature below the gelatinization temperature of starch. For example, in embodiments of the invention, the extrusion may be conducted at a temperature of less than about 52°C (125°F), preferably less than about 38°C (100°F), with the extrusion temperature being measured as the dough temperature in the extruder barrel, in the exit die, or exiting the die..

In embodiments of the invention the starch in the extruded dough or dough pieces prior to baking or frying may have a degree of starch gelatinization of less than about 30%, preferably less than about 20%, most preferably less than about 10%, or may be completely ungelatinized as measured by differential scanning calorimetry (DSC). Generally, starch gelatinization occurs when: a) water in a sufficient amount, generally at least about 30% by weight, based upon the weight of the starch, is added to and mixed with starch and, b) the temperature of the starch is raised to at least about 80°C (176°F), preferably 100°C (212°F) or more. The gelatinization temperature depends upon the amount of water available for interaction with the starch. The lower the amount of available water, generally, the higher the gelatinization temperature. Gelatinization may be defined as the collapse (disruption) of molecular orders within the starch granule, manifested in irreversible changes in properties such as granular swelling, native crystallite melting, loss of birefringence, and starch solubilization. The temperature of the initial stage of gelatinization and the temperature range over which it occurs are governed by starch concentration, method of observation, granule type, and heterogeneities within the granule population under observation. Pasting is the second-stage phenomenon following gelatinization in the dissolution of starch. It involves increased granular swelling, exudation of molecular components (i.e. amylose, followed by amylopectin) from the granule, and eventually, total disruption of the granules. See Atwell et al., "The Terminology And Methodology Associated With Basic Starch Phenomena," Cereal Foods World, Vol. 33, No. 3, pgs. 306-311 (March 1988).

In embodiments of the invention, the extruded dough or dough pieces prior to baking or frying may have a degree of expansion of less than about 20%, for example less than about 10%, preferably less than about 5%. The degree of expansion may be determined by comparing the volume of the dough prior to extrusion through the extrusion die, to the volume of the same weight of dough after extrusion through the extrusion die. Excessive expansion of the dough upon extrusion tends to decrease shape definition, and provides a puffed, structure, like that of a "cheese ball," rather than a desirable substantially uniform, lamellar cracker cell structure. In embodiments of the invention, the extruded doughs and dough pieces are leavenable upon baking or frying into a desirable substantially uniform lamellar cracker cell structure or snack cell structure.

The shaped dough ropes may be cut into shaped dough pieces upon exiting the extrusion die using conventional cutting equipment, such as a knife which cuts the shaped dough rope at the die exit across the longitudinal axis of the shaped dough rope. For example, in embodiments of the invention, the die may form the dough into a dough rope shape so that upon cutting the dough rope across the longitudinal axis of the dough rope, a dough piece is obtained in the shape of a wagon wheel, ring, tube, or spiral or helix. Exemplary cutting rates which may be employed are from about 29 to about 85 cuts per minute. The knife may cut in a reciprocating manner to simultaneously cut a plurality of dough ropes exiting the die head.

The cut dough pieces may be transported on a conventional conveyor belt to a conventional oven, such as a direct gas fired convection oven or band oven for baking into crispy or crunchy cheese crackers, or to a fryer for frying into crispy or crunchy fried snacks.

Conventional frying devices, such as conventional fryers, fryer/coolers, may be employed in processing of the shaped dough-pieces. Fryers equipped with agitators, or stirring paddles are preferred for preventing sticking of the individual dough pieces during frying. In embodiments of the invention fryers may be equipped with product submersion means for continued, complete, more rapid frying.

Frying temperatures and times may range from about 138°C (280°F). to about 182°C (360°F) for about 5 to about 20 minutes. While baking times and temperatures may vary for different dough formulations, oven types, etc., in general, commercial cracker-baking times may range from about 1.5 minutes to about 15 minutes, preferably from about 2 minutes to about 4 minutes, and baking temperatures may range from about 93°C (200°F) to about 315°C (600°F) preferably from about 93°C (200°F) to about 246°C (475°F).

After baking the baked pieces may be dried using conventional heating or drying equipment such as a convection oven or dryer, a rotary drum dryer, or a multi-pass dryer/cooler. Exemplary drying temperatures may range from about 93°C (200°F) to about 107°C (225°F), and exemplary drying times may range from about 4 minutes to about 7 minutes.

The baking and drying, or frying substantially reduces the moisture content of the shaped dough pieces so as to achieve a cracker or snack having a shelf-stable moisture content, such as less than about 6% by weight, for example, from about 0.25% by weight to about 4% by weight, based upon the weight of the cracker or snack. The baked or fried products of the present invention may have a relative vapor pressure ("water activity") of less than about 0.7, preferably less than about 0.6, for preservative free microbial shelf-stability. In embodiments of the invention, upon baking or frying the dough pieces may undergo substantial starch gelatinization, and the crackers or snacks of the present invention may have a degree of starch gelatinization of less than about 80%, as measured by Differential Scanning Calorimetry (DSC).

After baking and drying or after frying, the pieces may be topped with conventional seasonings and topping oil, using conventional seasoning application equipment such as a rotating drum.

The snack products of the present invention may be packaged in polyethylene foil lined bags with a nitrogen flush. The products may exhibit an extended shelf life of at least six months, preferably at least 12 months.

The cheese employed in the present invention may be any one or more than one real or dairy cheese, such as Parmesan cheese, Romano cheese, Cheddar cheese, Swiss cheese, Muenster cheese, Mozzarella cheese, Monterrey Jack, Pepper Jack cheese, Provolone cheese, Asiago cheese, Fontina cheese, Gorgonzola cheese, Blue cheese, and the like and any combinations thereof. Real cheddar cheese is preferred for use in the present invention. In embodiments of the invention, the dairy cheese may have a moisture content below about 60 wt %. Higher moisture content cheeses may be difficult to shred, and/or may boil out during baking. Examples of lower moisture content cheeses that may be used include Parmesan cheese and cheddar cheese. Exemplary cheeses which may be employed include so-called natural and aged cheeses produced by treatment of a dairy liquid with a clotting agent such as rennet, or a cheese-making culture, or by developing acidity to the isoelectric point of the casein, or a combination thereof. As known in the cheese making arts, the identity of the cheese product, and its characteristic flavor profile, texture and mouthfeel are governed by the particular cheese-making culture(s) or enzyme(s) chosen for the fermentation. The dairy liquid may be ripened by inoculating it with a starter culture (e.g., a lactic starter for cheddar cheese production) until a desired acidity is reached. The fermentation mixture can be provided by combining the ripened milk and rennet source, and fermenting the resulting mixture for a time and temperature sufficient to set the milk. The order of combination of these components can be varied. Following fermentation, the vitamin-fortified set milk can be processed in accordance with standard cheese making procedures used to remove whey by-product from the curd and form cheese product from the curd. For example, the set dairy liquid may be cut, cooked/heated, and whey is separated from the curd. After draining the whey, the curds may be subjected to cheddaring, milling, and salting. The salted curd can be hooped and pressed to remove additional whey. The desired flavor, aroma and texture of the cheese is obtained by ripening which involves holding the cheese over a period of time under controlled conditions (e.g., temperature, humidity). The term "ripening" is used herein synonymously with "curing" and "aging." The curd may be dressed, paraffin-coated, and/or packaged before ripening. After ripening, the cured cheese may be cut and directly used, or alternatively wrapped/packaged before use, in the methods of the present invention. The dairy cheese also may be commercially obtained, and in embodiments of the invention the cheese may be a full fat cheese, a reduced fat cheese or a low fat cheese. In embodiments of the invention, the cheese may be ground in conventional manner into small particulates or large particulates, for admixing with the other dough ingredients to facilitate the attainment of a substantially homogeneous dough.

The cheese may be employed in an amount of from about 5% by weight, to about 60% by weight, preferably from about 10% by weight to about 50% by weight, most preferably from about 15% by weight to about 25 % by weight, based upon the weight of the dough. The cheese helps to provide lubrication during dough preparation, dough mixing, and extrusion. Excessive amounts of cheese may soften the dough too much and may detract from dough shape retention during transport to the baking oven or fryer, or during baking or frying. Also, excessive amounts of cheese may detract from the attainment of a crispy texture in the baked or fried product. In preferred embodiments, higher cheese contents are desired for flavor impact and for increased protein content for the final product. For example, for indulgent products with a strong cheesy taste, higher cheese contents are preferred, such as from about 30% by weight to about 45% by weight, based upon the weight of the dough. In embodiments of the invention, the protein content of the final product may be from about 2 grams to about 7 grams, for example from about 4 grams to about 5 grams of protein per 28 gram serving size.

The flour component or farinaceous materials which may be combined with the cheese in producing the doughs of the present invention may be any comminuted cereal grain or edible seed or vegetable meal, derivatives thereof and mixtures thereof. Exemplary of the flour component or farinaceous materials which may be used are wheat flour, corn flour, corn masa flour, oat flour, barley flour, rye flour, rice flour, potato flour, grain sorghum flour, tapioca flour, graham flour, or starches, such as corn starch, wheat starch, rice starch, potato starch, tapioca starch, physically and/or chemically modified flours or starches, such as pregelatinized starches, and mixtures thereof. The flour may be bleached or unbleached, and may be a whole grain flour, such as a whole wheat flour. Wheat flour or mixtures of wheat flour with other grain flours are preferred. In embodiments of the invention, the protein content of the at least one flour, such as wheat flour, may be less than about 10% by weight, based upon the weight of the at least one flour. Generally, high protein content flours, such as durum wheat may result in a hard, glassy texture, so low protein content flours are preferred. Additionally, the cheese ingredient provides protein, so if too much protein is provided by the flour, then the product may become too hard or excessively crunchy or glassy upon baking or frying.

The total amount of the flour component used in the compositions of the present invention may range, for example, from about 20% by weight to about 80% by weight, preferably from about 30% by weight to about 75% by weight, based upon the weight of the dough. Unless otherwise indicated, all weight percentages are based upon the total weight of all ingredients forming the doughs or formulations of the present invention, except for inclusions such as flavor chips, nuts, raisins, and the like. Thus, "the weight of the dough" does not include the weight of inclusions.

In embodiments of the invention, the flour component may be replaced in whole or in part by conventional flour substitutes or bulking agents, such as a gelatinized starch-based bulking agent, or resistant starch ingredient, such as a resistant starch type III (RS III) ingredient, polydextrose, hollocellulose, hemi-cellulose, microcrystalline cellulose, mixtures thereof, and the like. Corn bran, wheat bran, oat bran, rice bran, mixtures thereof and the like may also be substituted in whole or in part for the flour component to enhance color, or to affect texture.

The flour substitutes or bulking agents, or bran may employed in amounts which do not adversely affect dough extrudability, dough shape retention, and texture or cell structure of the baked or cooked products. In embodiments of the invention, the amount of the flour substitute or bulking agent, such as a gelatinized starch-based bulking agent, or the RS III ingredient, may generally be up to about 75% by weight, based upon the total weight of the gelatinized bulking agent and the flour component, such as conventional, ungelatinized wheat flour.

In embodiments of the invention, a pregelatinized waxy starch or pregelatinized high amylopectin-content starch may be employed to enhance dough cohesiveness, extensibility, and extrudability or machinability, and a crispy, texture. Pregelatinized waxy starches or pregelatinized high amylopectin-content starches which may be used in the present invention include pregelatinized waxy maize starch, pregelatinized waxy rice starch, pregelatinized waxy barley starch, pregelatinized waxy sorghum starch, and mixtures thereof. A preferred pregelatinized waxy starch which may be used is a non-modified waxy maize starch such as X-Pand'R-612 produced by A.E. Staley Manufacturing Company. The preferred pregelatinized waxy maize starch is not chemically modified nor acid hydrolyzed. The pregelatinized waxy starch preferably has a moisture content of less than or equal to about 6% by weight and a pH of about 5 to about 6. The pregelatinized waxy starch preferably provides an initial thickening, to facilitate dough formation and avoid agglomeration and stickiness, followed by a significant loss in viscosity under moderate shear and temperature conditions to facilitate expansion during baking. Loss in viscosity increases the rate of heat penetration under heating or baking conditions during moisture removal. The viscosity of the pregelatinized waxy starch at 5% dry solids may be at least about 1000 cps at about 85°C, with the time required to reach peak viscosity at about 85°C being a maximum of about 3 minutes. The particle size distribution of the pregelatinized waxy starch may be less than or equal to about 20% by weight passing through a 50-mesh screen and less than or equal to about 30% passing through a 200-mesh screen. If the particle size is too small, the pregelatinized starch tends to hydrate predominately on the surface. Increasing the particle size of the pregelatinized waxy starch tends to increase its ability to form homogeneous dry blends and reduces its tendency to form lumps.

"Modified" in the starch industry is essentially a regulatory adjective that means chemically modified, rather than physically treated. Gelatinization is a physical treatment, in which no chemical bonds are destroyed or created. Chemical modification does result in actual chemical changes in the starch molecules. There are many different types of chemical modifications, but the most common chemical modification of waxy maize starch is a cross-linking reaction. Waxy starches are described as having a "long" texture when they are cooked. If the cooked starch slurry is poured from a spoon, it has a mucous appearance. By cross-linking the starch, the texture is said to become "short" because when the cooked slurry is poured from a spoon the stream breaks before it finishes falling.

The intended functionality of pregelatinized waxy maize starch for crispy coatings is to create films. To the extent that the starch is cross-linked (and to the extent that the starch contains amylose, as for normal pregelatinized corn starch), the film-form-forming functionality and expandability are decreased. A pregelatinized waxy starch which is not chemically modified provides superior functionality for film-forming and expansion to a crispy texture. A waxy starch has a very high amylopectin content and a very low amylose content. Generally, the amylose content of a waxy starch is less than about 2% by weight. Amylose-containing starches create a more leathery, crunchy texture. Wheat flour alone may not be able to generate the film-forming functionality needed to achieve a crispy texture in an expanded product. The addition of a pregelatinized waxy starch which is not chemically modified provides superior film forming ability, expansion, and crispiness compared to use of a chemically-modified waxy maize starch or a pregelatinized chemically modified waxy starch.

The pregelatinized waxy starch preferably has a high degree of starch gelatinization (as measured by differential scanning calorimetry (DSC)), so that it is more readily hydrated and more readily activated prior to heating. In embodiments of the present invention, the starch granules of the pregelatinized starches may be at least about 90% gelatinized, preferably at least about 95% gelatinized, most preferably completely gelatinized.

The amount of the pregelatinized waxy starch which may be used in embodiments of the present invention may range up to about 10% by weight, for example, from about 0.5% by weight, to about 5% by weight, preferably from about 1% by weight to about 3% by weight, based upon the weight of the dough.

Process-compatible ingredients, which may be used to modify the texture and taste of the products produced in the present invention, include sugars such as sucrose, fructose, lactose, dextrose, galactose, maltodextrins, corn syrup solids, hydrogenated starch hydrolysates, protein hydrolysates, glucose syrup, mixtures thereof, and the like. Reducing sugars, such as fructose, maltose, lactose, and dextrose, or mixtures of reducing sugars may be used to promote browning. Fructose is the preferred reducing sugar, because of its ready availability and its generally more enhanced browning and flavor-development effects. Exemplary sources of fructose include invert syrup, high fructose corn syrup, molasses, brown sugar, maple syrup, mixtures thereof, and the like.

The texturing ingredient, such as sugar, may be admixed with the other ingredients in either solid or crystalline form, such as crystalline or granulated sucrose, granulated brown sugar, or crystalline fructose, or in liquid form, such as sucrose syrup or high fructose corn syrup. In embodiments of the invention, humectant sugars, such as high fructose corn syrup, maltose, sorbose, galactose, corn syrup, glucose syrup, invert syrup, honey, molasses, fructose, lactose, dextrose, and mixtures thereof may be used to soften the texture of the baked product.

In addition to the humectant sugars, other humectants, or aqueous solutions of humectants which are not sugars or possess a low degree of sweetness relative to sucrose, may also be employed in the dough. For example, glycerol, sugar alcohols such as mannitol maltitol, xylitol and sorbitol, and other polyols, may be used as humectants.

Additional examples of humectant polyols (i.e. polyhydric alcohols) include glycols, for example propylene glycol, and hydrogenated glucose syrups. Other humectants include sugar esters, dextrins, hydrogenated starch hydrolysates, and other starch hydrolysis products.

In embodiments of the present invention, the total sugar solids content, or the texturizing ingredient content, of the doughs of the present invention may range from zero up to about 50% by weight, based upon the weight of the dough.

The sugar solids may be replaced in whole or in part by a conventional sugar substitute or conventional bulking agent such as polydextrose, hollocellulose, hemi-cellulose, microcrystalline cellulose, mixtures thereof, and the like. Polydextrose is a preferred sugar substitute or bulking agent for making the reduced calorie baked goods of the present invention. Exemplary replacement amounts may be at least about 25% by weight, for example at least about 40% by weight, preferably from about 50% by weight to about 75% by weight, of the original sugar solids content. In embodiments of the invention, the amount of the conventional sugar substitute, conventional bulking agent, or conventional flour substitute, preferably polydextrose, may be from about 10% by weight to about 35% by weight, for example from about 15% by weight to about 25% by weight, based upon the weight of the dough.

The moisture contents of the doughs of the present invention should be sufficient to provide the desired consistency to enable proper forming, machining, and cutting of the dough. The total moisture content of the doughs of the present invention will include any water included as a separately added ingredient, as well as the moisture provided by flour (which usually contains about 12% to about 14% by weight moisture), cheese, and the moisture content of other dough additives or ingredients included in the formulation, such as high fructose corn syrup, invert syrups, or other liquid humectants.

Taking into account all sources of moisture in the dough, including separately added water, the total moisture content of the doughs of the present invention is generally less than about 50% by weight, preferably less than about 45% by weight, based upon the weight of the dough. The cracker doughs of the present invention generally have a moisture content of about 33% by weight to about 40% by weight, based upon the weight of the dough.

Oleaginous compositions which may be used to obtain the doughs and baked goods or fried products of the present invention may include any known shortening or fat blends or compositions useful for baking applications, and they may include conventional food-grade emulsifiers. Vegetable oils, lard, marine oils, and mixtures thereof, which are fractionated, partially hydrogenated, and/or interesterified, are exemplary of the shortenings or fats which may be used in the present invention. Edible reduced- or low-calorie, partially digestible or non-digestible fats, fat-substitutes, or synthetic fats, such as sucrose polyesters or triacyl glycerides, which are process-compatible may also be used. Mixtures of hard and soft fats or shortenings and oils may be used to achieve a desired consistency or melting profile in the oleaginous composition. Exemplary of the edible triglycerides which can be used to obtain the oleaginous compositions for use in the present invention include naturally occurring triglycerides derived from vegetable sources such as soybean oil, palm kernel oil, palm oil, rapeseed oil, safflower oil, sesame oil, sunflower seed oil, and mixtures thereof. Marine and animal oils such as sardine oil, menhaden oil, babassu oil, lard, and tallow may also be used. Synthetic triglycerides, as well as natural triglycerides of fatty acids, may also be used to obtain the oleaginous composition. The fatty acids may have a chain length of from 8 to 24 carbon atoms. Solid or semi-solid shortenings or fats at room temperatures of, for example, from about 24°C (75°F) to about 35°C (95°F) may be used. Preferred oleaginous compositions for use in the present invention comprise soybean oil.

Generally, little, if any shortening or fat, or oil is needed because the cheese provides lubricity. In embodiments of the invention, the amount of oleaginous composition employed may generally range up to about 10% by weight, for example from about 1 % by weight to about 5% by weight, based upon the weight of the dough.

Baked goods which may be produced in accordance with the present invention include reduced calorie baked goods which are also reduced fat, low fat or no-fat products. As used herein, a reduced-fat food product is a product having its fat content reduced by at least 25% by weight from the standard or conventional product. A low-fat product has a fat content of less than or equal to three grams of fat per reference amount or label serving. However, for small reference amounts (that is, reference amounts of 30 grams or less or two tablespoons or less), a low-fat product has a fat content of less than or equal to 3 grams per 50 grams of product. A no-fat or zero-fat product has a fat content of less than 0.5 grams of fat per reference amount and per label serving. For accompaniment crackers, such as a saltine cracker, the reference amount is 15 grams. For crackers used as snacks, the reference amount is 30 grams. Thus, the fat content of a low-fat cracker would therefore be less than or equal to 3 grams of fat per 50 grams or less than or equal to about 6% fat, based upon the total weight of the final product. A no-fat accompaniment cracker would have a fat content of less than 0.5 grams per 15 grams or less than about 3.33%, based upon the weight of the final product.

In addition to the foregoing, the doughs of the invention may include other additives conventionally employed in crackers and cookies. Such additives may include, for example, milk by-products, egg or egg by-products, cocoa, vanilla or other flavorings, as well as inclusions such as nuts, raisins, coconut, flavored chips such as chocolate chips, butterscotch chips and caramel chips, dried herbs, dried fruits, dried vegetables, meat, meat analogues, and the like in exemplary amounts of up to about 15% by weight, based upon the weight of the dough.

A source of protein, which is suitable for inclusion in baked goods, may be included in the doughs of the present invention to promote Maillard browning. The source of protein may include non-fat dry milk solids, dried or powdered eggs, mixtures thereof, and the like. The amount of the proteinaceous source may, for example, range up to about 5% by weight, based upon the weight of the dough. However, generally the cheese provides a sufficient amount of protein, and other sources of protein may not be needed.

The dough compositions of the present invention may contain up to about 5% by weight of a leavening system, based upon the weight of the dough. Exemplary of chemical leavening agents or pH-adjusting agents which may be used include alkaline materials and acidic materials such as sodium bicarbonate, ammonium bicarbonate, calcium acid phosphate, calcium phosphate monobasic (monohydrate), sodium acid pyrophosphate, diammonium phosphate, tartaric acid, lactic acid, mixtures thereof, and the like. Yeast may be used alone or in combination with chemical leavening agents.

The doughs of the present invention may include antimycotics or preservatives, such as calcium propionate, potassium sorbate, sorbic acid, fumaric acid, citric acid, and the like. Exemplary amounts may range up to about 1% by weight of the dough, to assure microbial shelf-stability.

Emulsifiers may be included in effective, emulsifying amounts in the doughs of the present invention. Exemplary emulsifiers which may be used include, mono- and diglycerides, polyoxyethylene sorbitan fatty acid esters, lecithin, stearoyl lactylates, and mixtures thereof. Exemplary of the polyoxyethylene sorbitan fatty acid esters which may be used are water-soluble polysorbates such as polyoxyethylene (20) sorbitan monostearate (polysorbate 60), polyoxyethylene (20) sorbitan monooleate (polysorbate 80), and mixtures thereof. Examples of natural lecithins which may be used include those derived from plants such as soybean, rapeseed, sunflower, or corn, and those derived from animal sources such as egg yolk. Soybean-oil-derived lecithins are preferred lecithins. Exemplary of the stearoyl lactylates are alkali and alkaline-earth stearoyl lactylates such as sodium stearoyl lactylate, calcium stearoyl lactylate, and mixtures thereof. Exemplary amounts of the emulsifier which may be used range up to about 3% by weight of the dough.

Conventional snack-flavoring, -seasoning, and -coloring ingredients, odorants, condiments, confections, and mixtures thereof may be included in the dough and/or topically applied after baking or frying of the dough pieces. Exemplary of such ingredients which may be used include flavorings such as the savory flavors of barbecue, sour cream, chives, onion, garlic, butter, salt, vinegar, honey mustard, ranch, bacon, chicken, beef, cheese, and ham flavorings, the sweet flavors of cinnamon and sugar, peanut butter, banana nut, apple pie, honey graham, shortbread, butter toffee, cocoa crunch, chocolate chip, honey nut, oatmeal raisin, and vanilla crunch flavorings, cookie flavors, nuts and seeds, vanilla, and chocolate products, dried vegetable flakes and herb flakes such as pepper, basil, thyme, peppermint, dried tomato, and parsley flakes, condiment flakes, fruit flakes, spices, cheese powders such as cheddar cheese and Nacho cheese seasoning powders, and mixtures thereof.

The seasonings or flavorings may be applied by coating the fried or baked pieces with an oil-based binding composition, and then applying a powdered seasoning composition to the binder coated pieces. Use of an oil-based binding composition rather than a water-based binder avoids the need for subsequent drying to obtain a shelf-stable final cracker or snack product. In embodiments of the invention, the oil-based binding composition or oil slurry may be used in an amount of from about 2% by weight to about 8% by weight, preferably from about 4% by weight to about 6% by weight, based upon the total weight of the seasoned snack, when the snack is a fried snack. In baked varieties, the oil-based binding composition may be used in an amount up to about 20% by weight, preferably up to about 15% by weight, based upon the total weight of the seasoned snack. The powdered seasoning may be employed in an amount of from about 2% by weight to about 15% by weight, preferably from about 4% by weight to about 8% by weight, based upon the total weight of the seasoned snack.

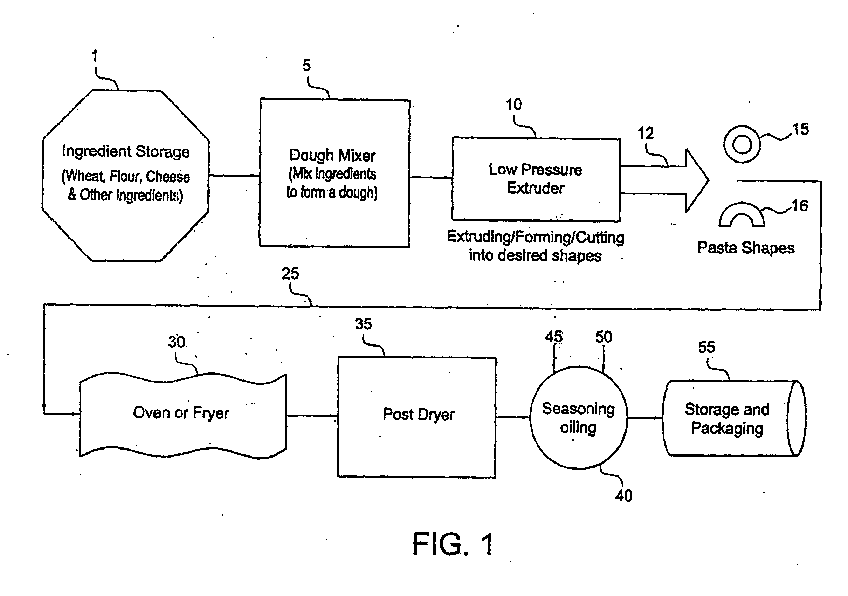

In a method for making a baked or fried cheese cracker or snack as shown in FIG. 1, ingredients including wheat flour and cheese from ingredient storage 1 are transferred to a dough mixer 5, such as a conventional upright dough mixer and blended or admixed to form a dough. In forming the dough, the wet ingredients may be added first to form a substantially homogeneous mixture, followed by addition of the cheese and minor ingredients such as leavening with continued mixing to obtain a substantially homogenous blend. The dry ingredients including flour and pregelatinized starches may then be added to the mixer with continuous mixing to form a substantially homogenous dough. The dough may then be fed to a low pressure extruder 10 which may be equipped with a horizontal die plate for extruding and forming into one or more shaped dough ropes which may be cut by a conventional cutting device 12 into desired pasta shapes. The cut dough pieces 15, 16 having pasta shapes may be transported on a belt conveyor 25 into a heating or cooking device 30, which may be a band oven or fryer. The baked or fried pieces may then be transported to a post baking or post frying dryer 35 for moisture reduction or cooling. The dried or cooled pieces may be fed to a seasoning drum 40. A slurry or oil 45 and a dry powdered seasoning 50 may also be fed to seasoning drum 40. The seasoned cheese crackers snacks may then be transported to packaging and storage operations 55.

The cheese crackers or cheese snacks of the present invention may be produced in any and all pasta shapes, such as helical or spiral shapes, tubular shapes, ring shapes, multi-ring shapes, such as Olympic ring shapes, and grid shapes, character, human, fish, bird, dinosaur, or animal shapes, letter or numerical shapes, and the like. The tubular shapes may be cylindrical tubes which have a circular cross section or any other cross section such as triangular, elliptical, square, rectangle, irregular, fluted, wedge, and the like. The ring shapes may be circular or any other shape such as triangular, elliptical, square, rectangle, irregular, fluted, and the like. The grid shapes may be triangular or any other shape such as circular, elliptical, square, rectangle, irregular, fluted, wedge, and tennis racquet shapes.

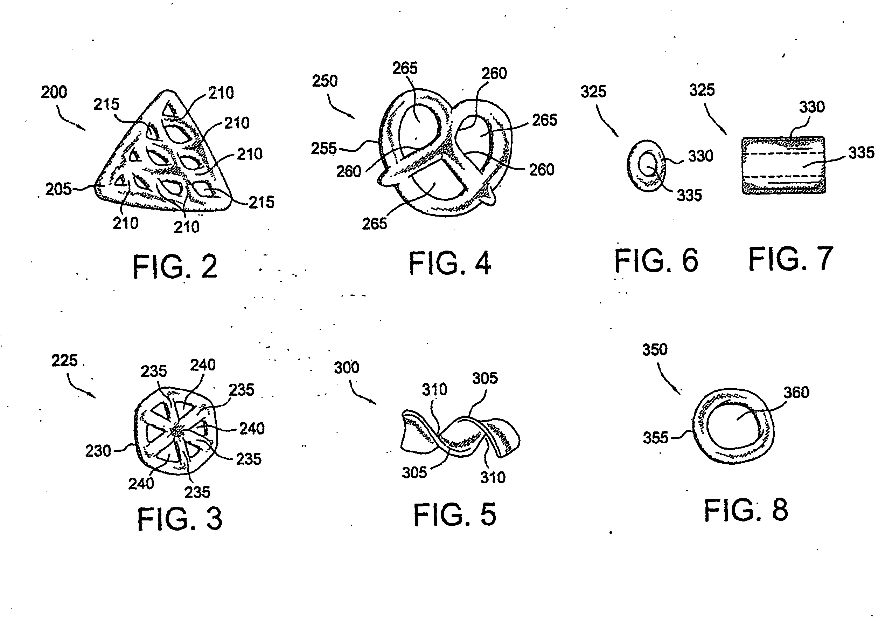

For example, as shown in FIGS. 2 to 4, the crackers or snacks may have a grid or ribbed pattern or shape. The grid shaped pieces, as shown in FIGS. 2 to 4, may have an outer or peripheral portion which connects to and surrounds an inner portion of inner interconnected grids or ribs which provide a plurality of hollow portions between the ribs.

As shown in FIG. 2, the triangular grid shaped cheese cracker or snack 200 has an outer or peripheral portion 205 in the shape of a triangle, and an inner portion of grids or ribs 210 which provide a plurality of hollow portions 215 which extend all the way through the cracker or snack 200.

As shown in FIG. 3, the wagon wheel shaped cheese cracker or snack 225 has an outer or peripheral portion 230 in the shape of a circle, and an inner portion of grids or ribs 235 which resemble the spokes of a wagon wheel and which provide a plurality of hollow portions 240 which extend all the way through the cracker or snack 225.

As shown in FIG. 4, the pretzel shaped cheese cracker or snack 250 has an outer or peripheral portion 255 in the shape of a three ring pretzel, and an inner portion of grids or ribs 260 which provide a plurality of hollow portions 265 which extend all the way through the cracker or snack 250.

In embodiments of the invention, as shown in FIG. 5, the cheese crackers or snacks may have a helix or spiral shape. Helix or spiral shaped pasta may be produced using a die whose conduits have, on the one hand, a configuration causing incurvation of the extruded dough and, on the other hand, an s-shaped outlet orifice, such that the extruded dough rolls up around its axis in the form of a helix. In embodiments of the invention, the dough ropes thus extruded may have a wall thickness of about 0.75 mm to about 2.5 mm and an apparent diameter of about 6 mm to about 12 mm. They may be cut into sections about 1.5 cm to about 5 cm, preferably from about 2.5 cm to about 3.5 cm in length with the aid of a knife pressing against the die. The dough rope may be in the form of a ribbon of various thicknesses which is twisted about its central longitudinal axis to provide a helical or spiral shape having a desired number of threads or flights per inch of length.

As shown in FIG. 5, the helix or spiral shaped cheese cracker 300 may have a noodle or ribbon appearance with a plurality of loose or widely spaced threads 305, for example about 2.5 threads per inch, which are continuous, and have a deep continuous helical groove 310 between the threads 305.

As shown in FIGS. 6 and 7, tubular shaped cheese crackers or snacks 325 of the present invention may have an outer cylindrical wall portion 330 and an inner hollow portion 335 which extends along the entire length of the tubular cracker or snack 325. The ratio of the outer diameter to the length of the tubular cracker or snack 325 may generally range from about 1.5:1 to about 0.25:1 for example from about 1.3:1 to about 0.5:1. The wall thickness may generally range from about 0,25 cm (0.10 inches) to about 0,63 cm (0.25 inches).

As shown in FIG. 8, ring shaped cheese crackers or snacks 350 of the present invention may have an outer cylindrical wall portion 355 and an inner hollow portion 360 which extends through the thickness of the ring shaped cracker or snack 350. The cross section of the outer cylindrical wall portion 355 may be circular. In embodiments of the invention, the ring shape may be circular or elliptical. The ring shaped cheese crackers or snacks may generally have an outer diameter of about 1,27 cm (0.5 inches) to about 5 cm (2 inches), for example from about 1,9 cm (0.75 inches) to about 3,17 cm (1.25 inches). The wall thickness or diameter may generally range from about 0,25 cm (0.10 inches) to about 0,63 cm (0.25 inches).

The present invention is further illustrated in the following examples, where all parts, ratios, and percentages are by weight, and all temperatures are in °F, unless otherwise stated:

### EXAMPLE 1

The ingredients and their relative amounts, which may be used to produce an extruded cheese cracker or snack in accordance with the present invention are:

| DOUGH INGREDIENT | PARTS BY WEIGHT | WEIGHT % |
|---|---|---|
| **STAGE 1** | | |
| Water | 8.00 | 18.70 |
| Sodium Stearoyl Lactylate | 0.09 | 0.21 |
| Oil | 1.5 | 3.51 |
| Food Coloring | 0.07 | 0.16 |

| **STAGE 2** | | |
|---|---|---|
| Aged Whole Milk Cheddar Cheese (about 36% by weight water and about 32% by weight fat) | 6.40 | 14.96 |
| Yeast (in solution) | 0.06 | 0.14 |
| Water (for yeast solution) | 0.25 | 0.58 |
| Dough Salt | 0.25 | 0.58 |
| Calcium Phosphate Monobasic (Monohydrate) | 0.11 | 0.26 |
| Lactic Acid | 0.06 | 0.14 |

| **STAGE 3** | | |
|---|---|---|
| Medium Wheat Flour, Enriched | 25.00 | 58.42 |
| Pregelatinized Waxy Maize Starch, X-Pandr 612 | 1.00 | 2.34 |
| **TOTAL** | 42.79 | 100.00 |

The dough may be produced by first adding the Stage 1 ingredients to an upright mixer and mixing the ingredients for about two minutes at about 20 rpm speed. The Stage 2 ingredients may then be added to the Stage 1 ingredients with mixing for about two minutes at about 20 rpm, followed by addition of the Stage 3 ingredients with mixing for an additional five minutes at 40 rpm to obtain a substantially homogeneous dough.

The dough may then be fed, without any lay time, to a low pressure pretzel extruder manufactured by Reading Bakery Systems, Robesonia, PA, which may be equipped with a horizontal die plate for vertically extruding and forming the dough into a triangular grid shaped dough rope. The extrusion may be conducted using a pre-feed operating at about 3 to 10 Hz and an extruder auger operating at about 8 to 30 Hz. The extruder may be operated at a pressure of about 138 kPa (20 psig) to about 690 kPa (100 psig), with the extruder die pressure being from about 276 kPa (40 psig) to about 690 kPa (100 psig). The extrusion temperature may be at about room temperature to about 29°C (85°F).

The dough rope may be cut at the die by a conventional blade or knife pressing against the die into a triangular grid shaped dough piece. The knife may operate at about 29 to about 85 cuts per minute and cut the at least substantially vertically oriented dough rope in an at least substantially horizontal direction.. The cut dough pieces may fall on and be transported on a belt conveyor while retaining their triangular grid shape, on their way into a continuous direct gas fired convention oven having a plurality of zones.

The pieces may be preheated at temperatures of about 93°C (200°F) to about 107°C (225°F) and baked at temperatures of from about 205°C (400°F) to about 246°C (475°F) for about 2 minutes to about 4 minutes to obtain leavened crackers or snacks having a shape as shown in FIG. 2. The baked pieces may then be transported to a post baking convection dryer and dried at about 93°C (200°F) to about 107°C (225°F) for about 4 minutes to about 7 minutes to obtain a moisture content of about 3% by weight.

The dried pieces may be fed to a seasoning drum where they may be tumbled and transported while oil and a powdered cheddar barbeque seasoning are sprayed on or applied to the surface of the dried pieces in an effective seasoning amount of about 8% by weight, based upon the total weight of the topped or seasoned cracker. The seasoned cheese crackers snacks having a triangular grid shape as shown in FIG. 2 may then be transported to a packager and packaged in conventional manner and stored.

### EXAMPLE 2

Extruded cheese crackers or snacks may be produced as in Example 1 except the extruder die employed may provide a shaped dough piece which is baked into a cracker or snack having a pasta shape as shown in FIGS. 3 to 8.

### EXAMPLE 3

Extruded cheese crackers or snacks may be produced as in Examples 1 and 2 except instead of baking in an oven, the shaped dough pieces may be fried in a fryer at a temperature of from about 138°C (280°F). to about 182°C (360°F) for a time of about 5 to about 20 minutes to obtain fried products having a pasta shape as shown in FIGS. 2 to 8.

### EXAMPLE 4

The ingredients and their relative amounts, which may be used to produce an extruded cheese cracker or snack in accordance with the present invention are:

| DOUGH INGREDIENT | PARTS BY WEIGHT | WEIGHT % |
|---|---|---|
| **STAGE 1** | | |
| Wheat Flour | 136.2 | 30.00 |
| Pregelatinized Waxy Maize Starch, X-Pandr 612 | 4.4 | 0.97 |
| Calcium Phosphate Monobasic (Monohydrate) | 2.3 | 0.50 |

| **STAGE 2** | | |
|---|---|---|
| Reduced Fat Cheddar Cheese (about 47_{.}5% by weight water and about 17.1 % by weight fat) | 244.3 | 53.8 |
| High Oleic Canola Oil | 11.90 | 2.63 |
| Lactic Acid | 0.50 | 0.10 |
| Water | 54.50 | 12.00 |
| **TOTAL** | 454.1 | 100.00 |

The dough may be produced by first adding the Stage 1 ingredients to an upright mixer and dry blending the ingredients for about one minute at about 20 rpm speed. The Stage 2 ingredients may then be added to the Stage 1 ingredients with mixing for about 4 to about 6 minutes at about 40 rpm to obtain a substantially homogeneous dough.

The dough may then be fed, without any lay time, to a low pressure pretzel extruder manufactured by Reading Bakery Systems, Robesonia, PA, which may be equipped with a horizontal die plate for vertically extruding and forming the dough into a triangular grid shaped dough rope. The extrusion may be conducted using a pre-feed operating at about 3 to 10 Hz and an extruder auger operating at about 8 to 30 Hz. The extruder may be operated at a pressure of about 138 kPa (20 psig) to about 690 kPa (100 psig), with the extruder die pressure being from about 276 kPa (40 psig) to about 690 kPa (100 psig). The extrusion temperature may be at about room temperature to about 29°C (85°F).

The dough rope may be cut at the die by a conventional blade or knife pressing against the die into a triangular grid shaped dough piece. The knife may operate at about 29 to about 85 cuts per minute and cut the at least substantially vertically oriented dough rope in an at least substantially horizontal direction.. The cut dough pieces may fall on and be transported on a belt conveyor while retaining their triangular grid shape, on their way into a continuous direct gas fired convention oven having a plurality of zones.

The pieces may be preheated at temperatures of about 93°C (200°F) to about 107°C (225°F) and baked at temperatures of from about 205°C (400°F) to about 246°C (475°F) for about 2 minutes to about 4 minutes to obtain leavened crackers or snacks having a shape as shown in FIG. 2. The baked pieces may then be transported to a post baking convection dryer and dried at about 93°C (200°F) to about 107°C (225°F) for about 4 minutes to about 7 minutes to obtain a moisture content of about 3% by weight.

The dried pieces may be fed to a seasoning drum where they may be tumbled and transported while oil and a powdered cheddar barbeque seasoning are sprayed on or applied to the surface of the dried pieces in an effective seasoning amount of about 8% by weight, based upon the total weight of the topped or seasoned cracker. The seasoned cheese crackers snacks having a triangular grid shape as shown in FIG. 2 may then be transported to a packager and packaged in conventional manner and stored.

### EXAMPLE 5

Extruded cheese crackers or snacks may be produced as in Example 4 except the extruder die employed may provide a shaped dough piece which is baked into a cracker or snack having a pasta shape as shown in FIGS. 3 to 8.

### EXAMPLE 6

Extruded cheese crackers or snacks may be produced as in Examples 4 and 5 except instead of baking in an oven, the shaped dough pieces may be fried in a fryer at a temperature of from about 138°C (280°F). to about 182°C (360°F) for a time of about 5 to about 20 minutes to obtain fried products having a pasta shape as shown in FIGS. 2 to 8.

## Claims

1. A method for producing extruded cheese crackers or snacks comprising:
a. admixing ingredients comprising at least one flour, cheese, and water to obtain a dough having a cheese content of from 5% by weight, to 60% by weight, or more preferably, from 10% by weight to 50% by weight based upon the weight of the dough,
b. extruding the dough through a die to obtain a shaped dough rope, the extrusion being at a pressure and temperature which avoid substantial gelatinization of starch and expansion of the dough,
c. cutting the shaped dough rope into shaped pieces, and
d. baking or frying the pieces to obtain shaped cheese crackers or snacks with a crispy or crunchy texture.

2. A method for producing extruded cheese crackers or snacks as claimed in claim 1 wherein said extrusion is conducted at a pressure of less than 120 psig and a temperature below the gelatinization temperature of starch.

3. A method for producing extruded cheese crackers or snacks as claimed in claim 2 wherein said extrusion is conducted at a pressure of less than 690 kPa (100 psig) and a temperature of less than 52°C (125°F) or optionally, at a pressure of from 138 kPa (20 psig) to 414 kPa (60 psig) and a temperature of less than 38°C (100°F)_{.}

4. A method for producing extruded cheese crackers or snacks as claimed in any one of Claims to 3 wherein the pieces are baked, and the baked pieces are dried.

5. A method for producing extruded cheese crackers or snacks as claimed in any one of Claims 1 to 4 further comprising a pregelatinized waxy starch.

6. A method for producing extruded cheese crackers or snacks as claimed in any one of Claims 1 to 5 wherein the die forms the dough into a dough rope shape so that upon cutting the dough rope across the longitudinal axis of the dough rope, a dough piece is obtained in the shape of a wagon wheel, ring, tube, grid, pretzel, helix, or spiral which may optionally be baked into a cracker having the shape of a wagon wheel, ring, tube, grid, pretzel, helix or spiral.

7. A method for producing extruded cheese crackers or snacks as claimed in Claim 6 wherein the dough piece is baked into a cracker having the shape of a helix or spiral.

8. A method for producing extruded cheese crackers or snacks as claimed in any one of Claims 1 to 7 wherein upon extrusion through the die, the dough expands less that 20% by volume, and the dough pieces are leavenable upon baking.

9. A method for producing extruded cheese crackers or snacks as claimed in any one of Claims 1 to 8 wherein said at least one flour comprises wheat flour, and the dough has a cheese content of from 15% by weight to 25% by weight, based upon the weight of the dough.

10. A method for producing extruded cheese crackers or snacks as claimed in any one of Claims 1 to 9 wherein said at least one flour has a protein content, of less than 10% by weight, based upon the weight of the at least one flour, the extruded dough has a degree of starch gelatinization of less than 30% as measured by Differential Scanning Calorimetry (DSC), and a degree of expansion of less than 20% by volume, and the cracker or snack has a degree of starch gelatinization of less than 80%, as measured by Differential Scanning Calorimetry (DSC).

11. A method for producing extruded cheese crackers or snacks as claimed in any one of Claims 1 to 10 wherein said cheese is a dairy cheese comprising at least one member selected from the group consisting of Parmesan cheese, Romano cheese, Cheddar cheese, Swiss cheese, Muenster cheese, Mozzarella cheese, Monterrey Jack, Pepper Jack cheese, Provolone cheese, Asiago cheese, Fontina cheese, Gorgonzola cheese, and Blue cheese.

12. A cheese cracker or snack obtainable by the process of any one of Claims 1 to 11 having a crisp, non-glassy texture, a leavened, non-puffed cellular structure, and the shape of a wagon wheel, ring, tube, grid, pretzel, helix or spiral.

13. A cheese cracker or snack comprising a dough which is baked to a non-glassy crispy, texture, and a leavened, non-puffed cell structure, the dough comprising a substantially homogeneous mixture of wheat flour, cheese, and a pregelatinized waxy starch, said dough having a cheese content of from 5% by weight, to 60% by weight, or more preferably from 10% by weight to 50% by weight based upon the weight of the dough, said cracker or snack having a hollow shape, a helix or spiral shape, or a grid shape.

14. A cheese cracker or snack as claimed in Claim 13 having the shape of a helix or spiral.

15. A cheese cracker or snack as claimed in Claim 13 or 14 wherein said cheese is a dairy cheese comprising at least one member selected from the group consisting of Parmesan cheese, Romano cheese, Cheddar cheese, Swiss cheese, Muenster cheese, Mozzarella cheese, Monterrey Jack, Pepper Jack cheese, Provolone cheese, Asiago cheese, Fontina cheese, Gorgonzola cheese, and Blue cheese.

## Patentansprüche

1. Verfahren zur Herstellung von extrudierten Käse-Crackern oder -Snacks, das Folgendes umfasst:
a. Vermischen der Inhaltsstoffe, die mindestens ein Mehl, Käse und Wasser umfassen, um einen Teig mit einem Käsegehalt von 5 Gewichts-% bis 60 Gewichts-% oder bevorzugter von 10 Gewichts-% bis 50 Gewichts-%, bezogen auf das Gewicht des Teigs, zu erhalten,
b. Extrudieren des Teigs durch eine Düse, um ein geformtes Teigseil zu erhalten, wobei die Extrusion bei einem Druck und einer Temperatur erfolgt, die umfangreiche Gelatinierung der Stärke und Ausdehnung des Teiges verhindert,
c. Schneiden des geformten Teigseils in geformte Stücke, und
d. Backen oder Braten der Stücke, um geformte Käse-Cracker oder -Snacks mit einer knusprigen oder knackigen Textur zu erhalten.

2. Verfahren zur Herstellung von extrudierten Käse-Crackern oder -Snacks nach Anspruch 1, worin genannte Extrusion bei einem Druck von geringer als 120 psig und einer Temperatur unterhalb der Gelatinierungstemperatur von Stärke durchgeführt wird.

3. Verfahren zur Herstellung von extrudierten Käse-Crackern oder -Snacks nach Anspruch 2, worin genannte Extrusion bei einem Druck von geringer als 690 kPa (100 psig) und einer Temperatur von geringer als 52°C (125°F) oder optional bei einem Druck von 138 kPa (20 psig) bis 414 kPa (60 psig) und einer Temperatur von geringer als 38°C (100°F) durchgeführt wird.

4. Verfahren zur Herstellung von extrudierten Käse-Crackern oder -Snacks nach einem der Ansprüche 1 bis 3, worin die Stücke gebacken werden und die gebackenen Stücke getrocknet werden.

5. Verfahren zur Herstellung von extrudierten Käse-Crackern oder -Snacks nach einem der Ansprüche 1 bis 4, das weiter eine vorgelatinierte Wachsstärke umfasst.

6. Verfahren zur Herstellung von extrudierten Käse-Crackern oder -Snacks nach einem der Ansprüche 1 bis 5, worin die Düse den Teig in eine Teigseilform formt, sodass beim Schneiden des Teigseils quer durch die Längsachse des Teigseils ein Teigstück in der Form eines Wagenrads, Rings, einer Röhre, eines Gitters, einer Brezel, Helix oder Spirale erhalten wird, das optional zu einem Cracker mit der Form eines Wagenrads, Rings, einer Röhre, eines Gitters, einer Brezel, Helix oder Spirale gebacken werden kann.

7. Verfahren zur Herstellung von extrudierten Käse-Crackern oder -Snacks nach Anspruch 6, worin das Teigstück zu einem Cracker mit der Form einer Helix oder Spirale gebacken wird.

8. Verfahren zur Herstellung von extrudierten Käse-Crackern oder -Snacks nach einem der Ansprüche 1 bis 7, worin sich der Teig bei Extrusion durch die Düse zu weniger als 20 Volumen-% ausdehnt und die Teigstücke beim Backen aufgehen können.

9. Verfahren zur Herstellung von extrudierten Käse-Crackern oder -Snacks nach einem der Ansprüche 1 bis 8, worin das genannte mindestens eine Mehl Weizenmehl umfasst und der Teig einen Käsegehalt von 15 Gewichts-% bis 25 Gewichts-%, bezogen auf das Gewicht des Teigs, aufweist.

10. Verfahren zur Herstellung von extrudierten Käse-Crackern oder -Snacks nach einem der Ansprüche 1 bis 9, worin das genannte mindestens eine Mehl einen Proteingehalt von weniger als 10 Gewichts-%, bezogen auf das Gewicht des mindestens einen Mehls, aufweist, der extrudierte Teig einen Gelatinierungsgrad der Stärke von weniger als 30 %, gemessen durch Differential-Scanning-Kalorimetrie (DSC), und einen Ausdehnungsgrad von weniger als 20 Volumen-% aufweist und der Cracker oder Snack einen Gelatinierungsgrad der Stärke von weniger als 80 %, gemessen durch Differential-Scanning-Kalorimetrie (DSC), aufweist.

11. Verfahren zur Herstellung von extrudierten Käse-Crackern oder -Snacks nach einem der Ansprüche 1 bis 10, worin genannter Käse ein Molkereikäse ist, der mindestens ein Mitglied umfasst, das aus der Gruppe ausgewählt ist, die aus folgenden besteht: Parmesankäse, Romano-Käse, Cheddar-Käse, Schweizer Käse, Münsterkäse, Mozzarella-Käse, Monterrey Jack, Pepper-Jack-Käse, Provolone-Käse, Asiago-Käse, Fontina-Käse, Gorgonzola-Käse und Blauschimmelkäse.

12. Käse-Cracker oder -Snack, erhältlich durch das Verfahren nach einem der Ansprüche 1 bis 11, der eine knusprige, nicht glasige Textur, eine aufgegangene, nicht puffige zelluläre Struktur und die Form eines Wagenrads, Rings, einer Röhre, eines Gitters, einer Brezel, Helix oder Spirale aufweist.

13. Käse-Cracker oder -Snack, der einen Teig umfasst, der zu einer nicht glasigen, knusprigen Textur und einer aufgegangenen, nicht puffigen Zellstruktur gebacken wird, wobei der Teig eine im Wesentlichen homogene Mischung aus Weizenmehl, Käse und vorgelatinierter Wachsstärke umfasst, genannter Teig einen Käsegehalt von 5 Gewichts-% bis 60 Gewichts-% oder bevorzugter von 10 Gewichts-% bis 50 Gewichts-%, bezogen auf das Gewicht des Teigs, aufweist, genannter Cracker oder Snack eine hohle Form, eine Helix- oder Spiralform oder eine Gitterform aufweist.

14. Käse-Cracker oder -Snack nach Anspruch 13 mit der Form einer Helix oder Spirale.

15. Käse-Cracker oder -Snack nach Anspruch 13 oder 14, worin genannter Käse ein Molkereikäse ist, der mindestens ein Mitglied umfasst, das aus der Gruppe ausgewählt ist, die aus folgenden besteht: Parmesankäse, Romano-Käse, Cheddar-Käse, Schweizer Käse, Münsterkäse, Mozzarella-Käse, Monterrey Jack, Pepper-Jack-Käse, Provolone-Käse, Asiago-Käse, Fontina-Käse, Gorgonzola-Käse und Blauschimmelkäse.

## Revendications

1. Méthode de production de craquelins ou collations au fromage extrudés comprenant les étapes consistant à :
a. mélanger des ingrédients comprenant au moins une farine, du fromage et de l'eau en vue d'obtenir une pâte ayant une teneur en fromage de 5 % en poids à 60 % en poids, ou plus préférablement de 10 % en poids à 50 % en poids par rapport au poids de la pâte,
b. extruder la pâte à travers une filière en vue d'obtenir un cordon de pâte façonné, l'extrusion se faisant à une pression et une température qui évitent la gélatinisation substantielle d'amidon et l'expansion de la pâte,
c. découper le cordon de pâte façonné en morceaux façonnés, et
d. faire cuire ou frire les morceaux en vue d'obtenir des craquelins ou collations au fromage façonnés avec une texture croustillante ou croquante.

2. Méthode de production de craquelins ou collations au fromage extrudés selon la revendication 1, dans laquelle ladite extrusion est réalisée à une pression inférieure à 120 psig et à une température en dessous de la température de gélatinisation de l'amidon.

3. Méthode de production de craquelins ou collations au fromage extrudés selon la revendication 2, dans laquelle ladite extrusion est réalisée à une pression inférieure à 690 kPa (100 psig) et à une température inférieure à 52°C (125°F) ou, éventuellement, à une pression de 138 kPa (20 psig) à 414 kPa (60 psig) et à une température inférieure à 38°C (100°F).

4. Méthode de production de craquelins ou collations au fromage extrudés selon l'une quelconque des revendications 1 à 3, dans laquelle les morceaux sont cuits et les morceaux cuits sont séchés.

5. Méthode de production de craquelins ou collations au fromage extrudés selon l'une quelconque des revendications 1 à 4, comprenant en outre un amidon visqueux pré-gélatinisé.

6. Méthode de production de craquelins ou collations au fromage extrudés selon l'une quelconque des revendications 1 à 5, dans laquelle la filière met la pâte sous la forme d'un cordon de pâte de sorte que, lors de la découpe du cordon de pâte en travers de l'axe longitudinal du cordon de pâte, un morceau de pâte est obtenu sous la forme d'une roue de chariot, d'un anneau, d'un tube, d'une grille, d'un bretzel, d'une hélice ou d'une spirale pouvant être éventuellement cuits pour donner un craquelin présentant la forme d'une roue de chariot, d'un anneau, d'un tube, d'une grille, d'un bretzel, d'une hélice ou d'une spirale.

7. Méthode de production de craquelins ou collations au fromage extrudés selon la revendication 6, dans laquelle le morceau de pâte est cuit pour donner un craquelin présentant la forme d'une hélice ou d'une spirale.

8. Méthode de production de craquelins ou collations au fromage extrudés selon l'une quelconque des revendications 1 à 7, dans laquelle, lors de l'extrusion à travers de la filière, la pâte s'étend de moins de 20 % en volume et les morceaux de pâte sont susceptibles de lever lors de la cuisson.

9. Méthode de production de craquelins ou collations au fromage extrudés selon l'une quelconque des revendications 1 à 8, dans laquelle ladite au moins une farine comprend la farine de blé, et la pâte a une teneur en fromage de 15 % en poids à 25 % en poids par rapport au poids de la pâte.

10. Méthode de production de craquelins ou collations au fromage extrudés selon l'une quelconque des revendications 1 à 9, dans laquelle ladite au moins une farine a une teneur en protéines inférieure à 10 % en poids par rapport au poids de l'au moins une farine, la pâte extrudée a un degré de gélatinisation de l'amidon inférieur à 30 % tel que mesuré par calorimétrie différentielle à balayage (DSC) et un degré d'expansion inférieur à 20 % en volume, et le craquelin ou la collation a un degré de gélatinisation de l'amidon inférieur à 80 % tel que mesuré par calorimétrie différentielle à balayage (DSC).

11. Méthode de production de craquelins ou collations au fromage extrudés selon l'une quelconque des revendications 1 à 10, dans laquelle ledit fromage est un fromage à base de lait comprenant au moins un membre choisi dans le groupe constitué des fromages suivants : le Parmesan, le Romano, le Cheddar, les fromages suisses, le Munster, la Mozzarella, le Monterey Jack, le Pepper Jack, le Provolone, l'Asiago, la Fontaine, le Gorgonzola et le Bleu.

12. Craquelin ou collation au fromage pouvant être obtenu par le procédé de l'une quelconque des revendications 1 à 11 ayant une texture croustillante, non vitreuse, une structure cellulaire levée non soufflée et la forme d'une roue de chariot, d'un anneau, d'un tube, d'une grille, d'un bretzel, d'une hélice ou d'une spirale.

13. Craquelin ou collation au fromage comprenant une pâte qui est cuite jusqu'à obtention d'une texture non vitreuse, croustillante et d'une structure cellulaire levée, non soufflée, la pâte comprenant un mélange essentiellement homogène de farine de blé, de fromage et d'un amidon visqueux pré-gélatinisé, ladite pâte ayant une teneur en fromage de 5 % en poids à 60 % en poids, ou plus préférablement de 10 % en poids à 50 % en poids par rapport au poids de la pâte, ledit craquelin ou ladite collation ayant une forme creuse, une forme d'hélice ou de spirale ou une forme de grille.

14. Craquelin ou collation au fromage selon la revendication 13 ayant la forme d'une hélice ou d'une spirale.

15. Craquelin ou collation au fromage selon la revendication 13 ou 14, dans lequel/laquelle ledit fromage est un fromage à base de lait comprenant au moins un membre choisi dans le groupe constitué des fromages suivants : le Parmesan, le Romano, le Cheddar, les fromages suisses, le Munster, la Mozzarella, le Monterey Jack, le Pepper Jack, le Provolone, l'Asiago, la Fontine, le Gorgonzola et le Bleu.
